# EUROPÄISCHE PATENTSCHRIFT

(11) **EP 1 559 960 B1**
(45) Veröffentlichungstag und Bekanntmachung des Hinweises auf die Patenterteilung: **25.03.2009**
(21) Anmeldenummer: 05001792.0
(22) Anmeldetag: 28.01.2005
(51) Int. Cl.: F24D 3/14, F24D 11/00

(54) **Anordnung zum Klimatisieren von Gebäuden**
Arrangement for climate control for buildings
Système pour la climatisation des bâtiments

(30) Priorität: 28.01.2004 DE 102004004322
(43) Veröffentlichungstag der Anmeldung: 03.08.2005
(73) Patentinhaber: Siegmund, Helmut, Dipl.-Ing., 53604 Bad Honnef (DE)
(72) Erfinder: Siegmund, Helmut, Dipl.-Ing., 53604 Bad Honnef (DE)
(74) Vertreter: Schaumburg, Thoenes, Thurn, Landskron, Eckert

(56) Entgegenhaltungen:
- EP-A- 1 371 915
- WO-A-03/064931
- FR-A- 2 794 224

## Beschreibung

Die Erfindung betrifft eine Anordnung zum Klimatisieren von Gebäuden, umfassend eine innerhalb eines einen Raum begrenzenden Gebäudeteils vorgesehene Führung für ein Wärmeträgermedium, die mit einer zu kühlenden oder zu heizenden Raumbegrenzungsfläche in wärmeübertragender Verbindung steht, eine Einrichtung zum Erwärmen oder Kühlen des Wärmeträgermediums, eine Fördereinrichtung zum Fördern des Wärmeträgermediums durch die Führung und einen in dem Gebäudeteil angeordneten Latentwärmespeicher, dessen Speichermaterial mit der Raumbegrenzungsfläche des Gebäudeteiles und der Führung für das Wärmeträgermedium in wärmeübertragender Verbindung steht, wobei das Speichermaterial in geschlossenen Hüllkörpern angeordnet ist.

Eine Klimatisierungsanordnung der vorstehend genannten Art ist z.B. aus der WO-A-03064931 bekannt.

In den vergangenen Jahren zeigte sich, dass durch vermehrten Einsatz von Klimaanlagen bei sommerlicher Wetterlage extreme Belastungsspitzen in den Stromnetzen aufgetreten sind. Während sich in den mitteleuropäischen Ländern diese Lastspitzen noch unterhalb der höchsten Stromnachfrage im Winter bewegten, kam es in Südeuropa bereits zu einer Umkehr der bisher üblichen saisonalen Belastungssituation. Doch selbst in Mitteleuropa sorgte die außergewöhnlich hohe Stromnachfrage in den Mittags- und frühen Nachmittagsstunden dafür, dass verstärkt teurere Kraftwerkskapazität in den Spitzenzeiten eingesetzt werden musste, wodurch sich der an der Strombörse ablesbare Stommarktpreis in den betreffenden Stunden drastisch erhöhte. Diese Preisentwicklung im Großhandelsmarkt für Strom hat Rückwirkungen auf die Preise im Endverbrauchermarkt, so dass mit weiteren Preissteigerungen für Energiebezug zu rechnen ist.

Die meisten Stromanbieter kalkulieren bei ihren Kunden mit fortlaufend registrierend gemessenem Leistungsbezug ihre Preise auf Basis des erwarteten Lastverhaltens. Dies führt im Ergebnis dazu, dass ein Kunde dann einen niedrigen Preis bezahlt, wenn er seinen Leistungsbezug in Zeiten starker Beanspruchung des Beschaffungsmarktes, also den Zeiten hoher Beschaffungskosten, reduziert. In Bürogebäuden mit Klimaanlagen liegt aber gerade in den hochpreisigen Sommerstunden der Höchstbedarf an Kühlleistung vor.

Mit einem Wärmespeicher ist es möglich, die Bereitstellung der Kühlleistung in lastärmere Zeiten zu verlegen, wobei die Speicher während der Hauptbelastungszeiten im Stromnetz die Wärmelast des Gebäudes aufnehmen und zwischenspeichern.

Ein gewisser Speichereffekt ist an sich in jedem Gebäude bereits durch die Wärmekapazität der Bauteile gegeben, die je nach Schwere der Bauart bereits einen ausgleichenden Effekt hat. Aus Kostengründen sind moderne Gebäude aber meist in leichter Bauform ausgeführt, so dass die Wärmespeicherkapazität keine Unterbrechung des Kühlbetriebes ohne erhebliche Komforteinschränkungen erlaubt. Hinzu kommt, dass auch schwerere Bauteile nur als sogenannte sensible Wärmespeicher wirken, sich ihre Temperatur also mit der Einspeicherung von Wärme erhöht. Dies führt dazu, dass die Pufferwirkung im zeitlichen Verlauf durch Anstieg der Materialtemperatur immer geringer wird und bei Erreichen der einzuhaltenden Raumtemperatur nicht mehr vorhanden ist.

Latentwärmespeicher hingegen verändern durch die Zu- oder Abfuhr von Wärme ihren Phasenzustand, ohne dass es während des Phasenwechsels zu einer Temperaturänderung kommt. Technisch wird dieser Effekt in der Klimatechnik bereits durch die Verwendung von Eisspeichern genutzt, die an zentraler Stelle im klimatisierten Gebäude untergebracht sind. Der Nachteil dieser Eisspeicher besteht neben dem zusätzlichen Platzbedarf aber darin, dass ihr Nutztemperaturnievau mit 0°C recht weit entfernt von den Betriebstemperaturen von Großflächen-Kühlsystemen ist, deren Vorlauftemperatur im Bereich von 16 bis 18°C liegt. Dadurch und durch den Eigenstrombedarf der Eisspeicher (zur gleichmäßigen Eisbildung im Speicher sind neben Umwälzpumpen meist auch Sprudeleinrichtungen erforderlich), kommt es zu einem zusätzlichen Energieeinsatz nicht nur während des Speicherbetriebes.

Aus der DE 199 63 323 A1 ist eine wärmespeichernde Bodenheizung bekannt, die nach dem thermochemischen Sorptionsprinzip arbeitet. Sie besteht aus einer Tragschicht, in der sich Heizführungen für das Arbeitsmittel und eine von Zeolith in granulierter Form gebildete Speichermasse befinden, wobei die ganze Tragschicht von Dichtschichten hermetisch eingeschlossen ist. Das Arbeitsmittel ist durch die Heizführungen geleiteter Dampf, der über Öffnungen in den Heizführungen in die Speichermasse gelangt, wobei die Wärme in der Speichermasse thermochemisch umgesetzt wird. Dabei wird der Wärmespeicher durch Freisetzung von Adsorptionswärme entladen. Mit Hilfe von elektrischen Heizleitern und einer Evakuierungspumpe kann die Feuchtigkeit aus der Speichermasse wieder entfernt werden, wobei die Speichermasse getrocknet und über die Zuführung der Desorptionswärme wieder aufgeladen wird. Eine solche Anordnung erfordert sehr aufwendige Baumaßnahmen.

Ferner wird in der US 47 47 240 ein Baumaterial beschrieben, das Latentspeichermaterial enthält, das in Mikrokapseln eingeschlossen ist. Das Baumaterial soll bei der Verarbeitung in Gebäuden dazu dienen, über einen Achtstundentag hin die Temperatur zu vergleichmäßigen, indem während der wärmeren Zeiten ein Kühleffekt durch Aufnahme von Wärme und in kälteren Zeiten ein Heizeffekt durch die Abgabe der Wärme erreicht wird. Unter Verwendung dieses Materials hergestellte Bauelemente sind aber bezüglich ihres thermischen Verhaltens rein passive Elemente, welche die der Erfindung zugrundeliegende Aufgabe nicht lösen können.

Der Erfindung liegt die Aufgabe zugrunde, eine Anordnung der eingangs genannten Art anzubieten, die es ermöglicht, den Leistungsbedarf für die Klimatisierung von Gebäuden über den Tag hin zu vergleichmäßigen und damit die Stromkosten zu senken.

Diese Aufgabe wird bei einer Anordnung der eingangs genannten Art erfindungsgemäß dadurch gelöst, dass die das Speichermaterial enthaltenden Hüllkörper zwischen einer ersten Estrichschicht, in welcher das Wärmeträgermedium führende Leitungen eingebettet sind, und einer die Raumbegrenzungsfläche bildenden zweien Estrichschicht angeordnet sind.

Vorzugsweise wird ein Speichermaterial verwendet, dessen Schmelzpunkt zwischen ca.16°C und 20°C und damit in der Nähe der angestrebten Raumtemperatur liegt.

Bevorzugt werden Hüllkörper in Form von Kugeln mit einem Durchmesser verwendet, der von 1 µ (Mikrokapseln) bis 30 mm, vorzugsweise 20 bis 25 mm betragen kann. Beispielsweise wird auf eine Trägerfläche des Bodens eine Schüttung aus diesen Kugeln aufgebracht, über die dann Estrichmaterial gegossen wird.

Die Hüllkörper können aber auch Blindrohre mit kreisförmigem oder polygonalem Querschnitt sein, in welche das Speichermaterial eingefüllt wird. Solche Blindrohre mit einer Länge von ca. 300 bis 900 mm können ebenfalls in das Baumaterial eingebettet werden, eignen sich aber insbesondere zum Verlegen in hohlen Wänden, Decken oder Bodenflächen. Sie können dabei an in dem Gebäudeteil verlegten flächigen Trägerelementen befestigt werden, wie dies beispielsweise für Heizmittel- oder Kühlmittelrohre bei Flächenheizungen seit langem bekannt ist. Beispielsweise können die Blindrohre dann alternierend mit solchen Heizmittel- oder Kühlmittelrohren an denselben Trägerelementen befestigt werden.

Bei einer weiteren Ausführungsform haben die Hüllkörper die Form flacher quaderförmiger Klötzchen und sind an einer flexiblen Materialbahn, z.B. einem Gittervlies befestigt, und zwar vorzugsweise in beabstandeten Reihen, sodaß sie zwischen den das Wärmeträgermedium führenden Leitungen eingelegt werden können.

Bei einer vorteilhaften Ausführungsform der Erfindung sind die Hüllkörper plattenförmig ausgebildet und haben an ihrer Außenseite Halterungen für das Wärmeträgermedium führende Leitungen. Auf diese Weise wird ein guter Kontakt zwischen den Führungen für das Wärmeträgermedium und dem Latentwärmespeicher hergestellt. Die Hüllkörper können aus Kunststoff oder Metall bestehen.

Die Erfindung betrifft ferner ein plattenförmiges Bauelement zum Erstellen von Gebäuden, beispielsweise ein Wand-, Boden- oder Deckenelement, das eine Führung für ein Wärmeträgermedium enthält, die mit einer Raumbegrenzungsfläche des Bauelementes in wärmeübertragender Verbindung steht und an eine Fördereinrichtung für das Wärmeträgermedium anschließbar ist, wobei innerhalb des Bauelementes ein Latentwärmespeicher angeordnet ist, dessen Speichermaterial sowohl mit der Raumbegrenzungsfläche als auch mit der Führung für das Wärmeträgermedium in wärmeübertragender Verbindung steht, wobei der Latentwärmespeicher in der oben beschriebenen Weise ausgebildet und angeordnet sein kann.

Weitere Merkmale und Vorteile der Erfindung ergeben sich aus den weiteren Unteransprüchen und der folgenden Beschreibung, welche in Verbindung mit den beigefügten Zeichnungen die Erfindung anhand von Ausführungsbeispielen erläutert. Es zeigen:
- Fig. 1-3,5-8: jeweils einen schematischen Schnitt durch ein flächiges Bauelement.
- Fig.4: einen schematischen Teilschnitt durch ein flächiges Bauelement gemäß der vorliegenden Erfindung
- Fig. 9: eine schematische perspektivische Ansicht eines Speicherelementes mit plattenförmigem Hüllkörper und
- Fig. 10: plättchen- oder klötzchenförmiger Hüllkörper, die an einer Trägerbahn befestigt sind.

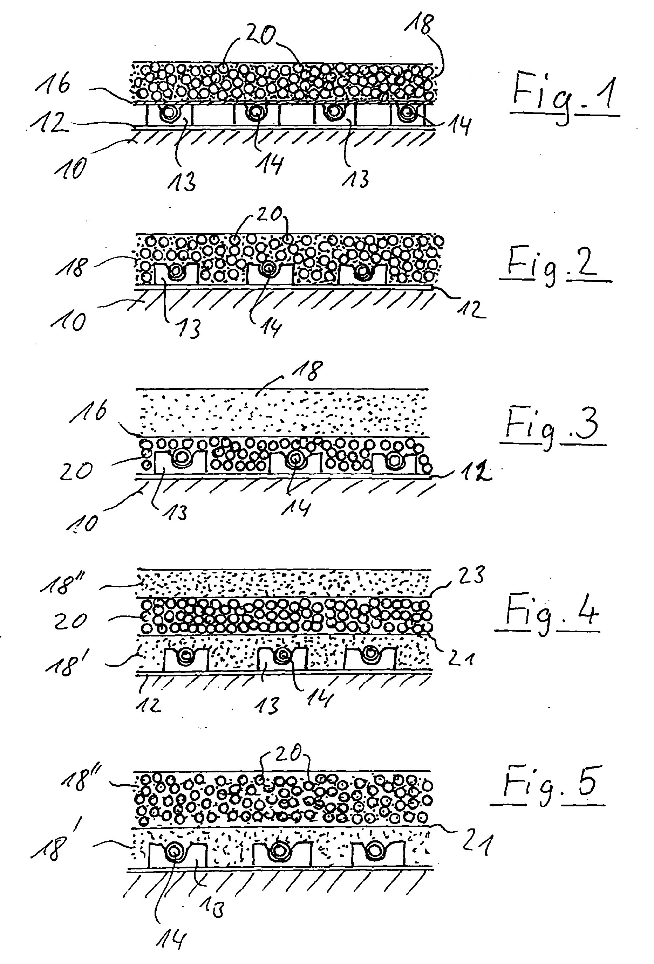

Fig.1 zeigt ein Beispiell eines ausgebildeten Fußbodens oder eines zur Erstellung eines Bodens geeigneten Elementes mit einem Unterboden 10, auf dem eine Trägerplatte 12 aufliegt, an der in an sich bekannter Weise z.B. mit Haltenocken 13 Leitungen 14 zum Führen eines Wärmeträgermediums, d.h. eines Heiz- oder Kühlmediums befestigt sind. Diese Leitungen 14 sind durch eine Zwischenschicht 16 abgedeckt, die mit einem Estrich 18 überdeckt ist. In diesem Estrich sind Kunststoffkugeln 20 eingebettet, welche das Latentspeichermaterial enthalten.

Die Fig. 2 bis 5 zeigen verschiedene Varianten der Ausführungsform gemäß Fig. 1. Bei der Ausführungsform gemäß Fig. 2 entfällt die Zwischenschicht 16. Der die mit dem Speichermaterial gefüllten Kunststoffkugeln 20 enthaltende Estrich umgibt auch die Leitungen 14 und die Haltenocken 13.

Bei der Ausführungsform gemäß Fig. 3 sind die Leitungen 14 und die Haltenocken 13 nur von den das Speichermaterial enthaltenden Kunststoffkugeln 20 überdeckt und umgeben. Darüber liegt, getrennt durch eine Zwischen- oder Trennschicht 16 der Estrich 18.

Bei der Ausführungsform gemäß Fig. 4 sind die Leitungen 14 und die Klemmnokken 13 von einer ersten Estrichstrich 18' überdeckt, über der getrennt durch eine Zwischenschicht 21 die das Speichermaterial enthaltenden Kugeln 20 liegen. Die aus den Kugeln 20 gebildete Schicht wiederum wird, getrennt durch eine Zwischenschicht 23, von einer zweiten Estrichschicht 18" überdeckt.

Die Ausführungsform gemäß Fig. 5 unterscheidet sich von der Ausführungsform gemäß Fig. 4 dadurch, daß die zweite Trenn- oder Zwischenschicht 23 entfällt und die aus den Kugeln 20 gebildete Schicht und die zweite Estrichschicht 18" zusammenfallen, d.h. das Speichermaterial in die zweite Estrichschicht 18" eingebettet ist.

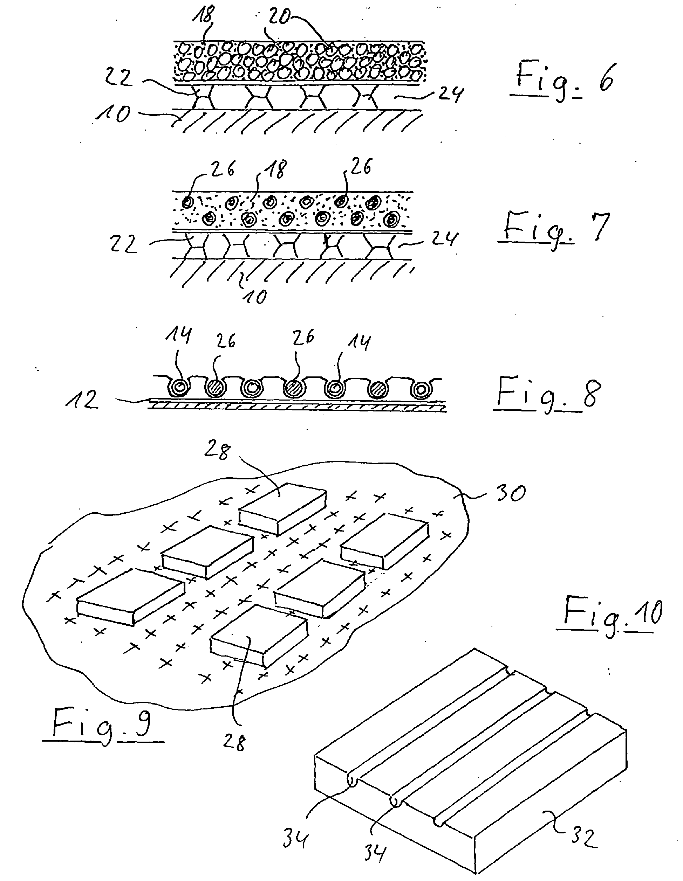

Die Ausführungsform gemäß Fig. 6 unterscheidet sich von jener der Fig. 1 bis 5 dadurch, daß das Wärmeträgermedium nicht in Leitungen geführt wird, sondern daß der durch Distanzelemente 22 zwischen Unterboden 10 und Zwischenschicht 16 gebildete Hohlraum 24 als Führung für das gasförmige Wärmeträgermedium, beispielsweise Luft, genutzt wird.

Das Ausführungsbeispiel gemäß Fig. 7 entspricht jenem der Fig. 6 mit der Ausnahme, daß das Speichermaterial nicht in Kugeln, sondern in Blindrohren 26 angeordnet ist, die in dem Estrich 18 verlegt sind.

Bei der Ausführungsform gemäß Fig. 8, die sich insbesondere für Wandelemente eignet, sind auf der Trägerplatte 12 die Leitungen 14 zur Führung eines Wärmeträgermediums und die das Speichermaterial enthaltenden Blindrohre 26 alternierend befestigt. Die Leitungen und Blindrohre sind dabei in Klemmrillen eingelegt, die in der Trägerplatte 12 ausgebildet sind.

Anstelle von Blindrohren mit kreisförmigem Querschnitt können auch flache streifenförmige Hüllkörper verwendet werden, die grundsätzlich aber in der gleichen Weise wie die Blindrohre 26 verlegt werden können.

Fig. 9 zeigt eine weitere Variante der mit dem Speichermaterial gefüllten Hüllkörper. Bei dieser Ausführungsform haben die Hüllkörper die Form flacher quaderförmiger Klötzchen oder Plättchen 28 mit einer Grundfläche von beispielsweise 25 x 30 mm. Die Plättchen 28 sind in voneinander beabstandeten Reihen auf einem Gittervlies 30 befestigt. Das Gittervlies kann zusammen mit den an ihm befestigten Plättchen 28 so auf eine Anordnung von Leitungen 14 aufgelegt werden, daß die Plättchen 28 jeweils zwischen den Leitungen 14 zu liegen kommen.

Fig. 10 schließlich zeigt die Ausführungsform eines Speicherelementes mit einem plattenförmigen Hohlkörper 32, der das Speichermaterial enthält und in dem Klemmrillen 34 ausgebildet sind, in welche Leitungen 14 zum Führen eines Wärmeträgermediums eingelegt werden können. Diese plattenförmigen Speicherelemente können nun in dem Gebäudeteil in Kontakt mit der zu heizenden oder zu kühlenden Raumbegrenzungsfläche verlegt werden. Der besondere Vorteil dieser Ausführungsform liegt in dem unmittelbaren Kontakt zwischen den Leitungen für das Wärmeträgermedium und dem Speicherelement. Diese Lösung ist besonders geeignet für Kühldecken, da im Gegensatz zu einer Bodenfläche mit einem wärmeübertragenden Estrich keine andere Möglichkeit besteht, Wärme zwischen dem aktiven System und dem Speicher zu übertragen.

Das Funktionsprinzip von Latentwärmespeichern ist an sich bekannt. Als hinsichtlich ihrer thermophysikalischen Eigenschaften geeignete Materialien für bauteilintegrierte Latentwärmespeicher eignen sich beispielsweise kurzkettige Paraphine (Hexadekan und Heptadekan), Glycerin, Schwefeltrioxid, reine Essigsäure, Salze und auch andere Stoffe, deren Schmelztemperatur etwa zwischen 16 und 20 °C liegt. Eine geringere Schmelztemperatur würde dazu führen, daß zum Laden des Speichers eine System-Vorlauftemperatur eingestellt werden müßte, bei der es zu einer Taupunktunterschreitung an der zu kühlenden Fläche käme. Höhere Schmelztemperaturen hingegen hätten zur Folgen, daß die Temperaturdifferenz zwischen dem schmelzenden Speichermaterial und der einzuhaltenden Raumtemperatur zu einer verringerten Entladeleistung führen würde und die Kühlfunktion während der Speicherentladung zu stark eingeschränkt wäre.

Im Ladebetrieb des bauteilintegrierten Latentwärmespeichers ist eine Systemvorlauftemperatur so weit unterhalb der Schmelztemperatur des Speichermaterials eingestellt, daß das Speichermaterial einen Phasenwechsel von flüssig nach fest vollzieht. Da für die Speicherladung in der Praxis der Raumklimatisierung eine deutlich längere Zeit als für den Entladebetrieb zur Verfügung steht, muß die Temperatur unmittelbar an der Außenseite des Speichers nur ganz gering unterhalb der Schmelz- bzw. Erstarrungstemperatur des Speichermaterials liegen. Allerdings ist zu berücksichtigen, daß durch Wärmeleitvorgänge innerhalb der Bauteile und die damit verbundenen Temperaturgradienten innerhalb der Konstruktion zusätzliche Temperaturdifferenzen vorhanden sind, die von der Bauform der Konstruktion abhängig sind. Je näher das Speichermaterial an den kühlmittelführenden Leitungen liegt und je besser die Wärmeübertragung zwischen Kühlmittel und Speichermaterial ist, um so geringer sind die einzuplanenden Temperaturdifferenzen. Sobald durch eine Betriebsunterbrechung bzw. -einschränkung der zentralen Kälteversorgung die Systemvorlauftemperatur geringfügig ansteigt, erhöht sich auch die Temperatur im Speichermaterial, bis dieses Material seine Schmelztemperatur erreicht hat. Idealerweise ist dieser Zustand nach einem Temperaturanstieg von nicht mehr als 1 bis 2 K erreicht, so daß sich die Kühlleistung der Raumbegrenzungsfläche bis dahin nur unwesentlich reduziert hat. Die Zufuhr weiterer Wärme aus dem zu klimatisierenden Raum wird dann von dem schmelzenden Speichermaterial aufgenommen, ohne daß sich die Temperatur innerhalb der Raumbegrenzungsfläche weiter erhöht. Erst wenn das Speichermaterial vollständig geschmolzen ist, steigt die Temperatur innerhalb der Konstruktion an.

## Patentansprüche

1. Anordnung zum Klimatisieren von Gebäuden, umfassend eine innerhalb eines einen Raum begrenzenden Gebäudeteiles vorgesehene Führung (14, 24) für ein Wärmeträgermedium, die mit einer zu kühlenden oder zu heizenden Raumbegrenzungsfläche in wärmeübertragender Verbindung steht, eine Einrichtung zum Erwärmen oder Kühlen des Wärmeträgermediums, eine Fördereinrichtung zum Fördern des Wärmeträgermediums durch die Führung (14, 24) und einen in dem Gebäudeteil angeordneten Latentwärmespeicher, dessen Speichermaterial mit der Raumbegrenzungsfläche des Gebäudeteiles und der Führung (14, 24) für das Wärmeträgermedium in wärmeübertragender Verbindung steht, wobei das Speichermaterial in geschlossenen Hüllkörpern (20, 26, 28) angeordnet ist, **dadurch gekennzeichnet, daß** die das Speichermaterial enthaltenden Hüllkörper zwischen einer ersten Estrichschicht, in welcher das Wärmeträgermedium führende Leitungen eingebettet sind, und einer die Raumbegrenzungsfläche bildenden zweiten Estrichschicht angeordnet sind.

2. Anordnung nach Anspruch 1, **dadurch gekennzeichnet, daß** die Schmelztemperatur des Speichermaterials zwischen ca. 16 °C und 20 °C liegt.

3. Anordnung nach Anspruch 1 oder 2, **dadurch gekennzeichnet, daß** die das Speichermaterial enthaltenden Hüllkörper (20, 26) in das das Gebäudeteil bildende Material (18) eingebettet sind.

4. Anordnung nach einem der Ansprüche 1 bis 3, **dadurch gekennzeichnet, daß** die das Speichermaterial enthaltenden Hüllkörper das Wärmeträgermedium umgebende Leitungen mindestens teilweise umgeben.

5. Anordnung nach einem der Ansprüche 1 bis 4, **dadurch gekennzeichnet, daß** die Hüllkörper Kugeln (20) mit einem Durchmesser von ca. 1u bis 30 mm sind.

6. Anordnung nach einem der Ansprüche 1 bis 5, **dadurch gekennzeichnet, daß** die Hüllkörper Blindrohre (26) mit kreisförmigem oder polygonalem Querschnitt sind.

7. Anordnung nach Anspruch 6, **dadurch gekennzeichnet, daß** die Blindrohre eine Länge von ca. 300 bis 900 mm haben.

8. Anordnung nach Anspruch 6 oder 7, **dadurch gekennzeichnet, daß** die Blindrohre an im Gebäudeteil verlegten flächigen Trägerelementen (12) befestigt sind.

9. Anordnung nach Anspruch 8, **dadurch gekennzeichnet, daß** die Blindrohre (26) mittels an den Trägerelementen (12) ausgebildeten Klipshalterungen gehalten sind.

10. Anordnung nach Anspruch 1, **dadurch gekennzeichnet, daß** die Hüllkörper (32) plattenförmig ausgebildet sind und an ihrer Außenseite Halterungen (34) für das Wärmeträgermedium führende Leitungen haben.

11. Anordnung nach Anspruch 1, **dadurch gekennzeichnet, daß** die Hüllkörper die Form flacher Quader (28) haben.

12. Anordnung nach Anspruch 11, **dadurch gekennzeichnet, daß** die Quadergrundfläche ca. 25 x 30 mm beträgt.

13. Anordnung nach Anspruch 11 oder 12, **dadurch gekennzeichnet, daß** die das Speichermaterial enthaltenden Hüllkörper an einer flexiblen Materialbahn (30) in beabstandeten Reihen befestigt sind.

14. Anordnung nach Anspruch 13, **dadurch gekennzeichnet, daß** die Materialbahn (30) ein Gittervlies ist.

15. Anordnung nach einem der Ansprüche 1 bis 14, **dadurch gekennzeichnet, daß** die Hüllkörper (20, 26, 28) aus Kunststoff bestehen.

16. Anordnung nach einem der Ansprüche 1 bis 15, **dadurch gekennzeichnet, daß** die Hüllkörper (32) aus Metall bestehen.

17. Plattenförmiges Bauelement zum Erstellen von Gebäuden, **gekennzeichnet durch** eine Führung (14, 24) für ein Wärmeträgermedium, die mit einer Raumbegrenzungsfläche des Bauelementes in wärmeübertragender Verbindung steht und an eine Fördereinrichtung für das Wärmeträgermedium anschließbar ist, und einen innerhalb des Bauelementes angeordneten Latentwärmespeicher, dessen Speichermaterial sowohl mit der Raumbegrenzungsfläche als auch der Führung für das Wärmeträgermedium in wärmeübertragender Verbindung steht, wobei das Speichermaterial in geschlossenen Hüllkörpern (20, 26, 28) angeordnet ist, **dadurch gekennzeichnet, daß** die das Speichermaterial enthaltenden Hüllkörper zwischen einer ersten Estrichschicht (18'), in welcher das Wärmeträgermedium führende Leitungen eingebettet sind, und einer die Raumbegrenzungsfläche bildenden zweiten Estrichschicht (18") angeordnet sind.

18. Bauelement nach Anspruch 17, **dadurch gekennzeichnet, daß** die Schmelztemperatur des Speichermaterials zwischen ca. 16 °C und 20 °C liegt.

19. Bauelement nach Anspruch 17 oder 18, **dadurch gekennzeichnet, daß** die das Speichermaterial enthaltenden Hüllkörper (20, 26) in das das Bauelement bildende Material eingebettet sind.

20. Bauelement nach einem der Ansprüche 17 bis 19, **dadurch gekennzeichnet, daß** die das Speichermaterial enthaltenden Hüllkörper (20) das Wärmeträgermedium führende Leitungen (14) mindestens teilweise umgeben.

21. Bauelement nach einem der Ansprüche 17 bis 20, **dadurch gekennzeichnet, daß** die Hüllkörper Kugeln (20) mit einem Durchmesser von 1µ bis 30 mm sind.

22. Bauelement nach einem der Ansprüche 17 bis 20, **dadurch gekennzeichnet, daß** die Hüllkörper Blindrohre (26) mit kreisförmigem oder polygonalem Querschnitt sind.

23. Bauelement nach Anspruch 22, **dadurch gekennzeichnet, daß** die Blindrohre (26) eine Länge von ca. 300 bis 900 mm haben.

24. Bauelement nach Anspruch 22 oder 23, **dadurch gekennzeichnet, daß** die Blindrohre (26) an in dem Bauelement verlegten flächigen Trägerelementen (12) befestigt sind.

25. Bauelement nach Anspruch 24, **dadurch gekennzeichnet, daß** die Blindrohre (26) mittels an den Trägerelementen (12) ausgebildeten Klipshalterungen gehalten sind.

26. Bauelement nach Anspruch 17, **dadurch gekennzeichnet, daß** die Hüllkörper (32) plattenförmig ausgebildet sind und an ihrer Außenseite Halterungen (34) für das Wärmeträgermedium führende Leitungen haben.

27. Bauelement nach Anspruch 17, **dadurch gekennzeichnet, daß** die Hüllkörper die Form flacher Quader (28) haben.

28. Bauelement nach Anspruch 27, **dadurch gekennzeichnet, daß** die Quadergrundfläche ca. 25 x 30 mm beträgt.

29. Bauelement nach Anspruch 27 oder 28, **dadurch gekennzeichnet, daß** die das Speichermaterial enthaltenden Hüllkörper an einer flexiblen Materialbahn (30) in beabstandeten Reihen befestigt sind.

30. Bauelement nach Anspruch 29, **dadurch gekennzeichnet, daß** die Materialbahn (30) ein Gittervlies ist.

31. Bauelement nach einem der Ansprüche 17 bis 30, **dadurch gekennzeichnet, daß** die Hüllkörper aus Kunststoff bestehen.

32. Bauelement nach einem der Ansprüche 17 bis 30, **dadurch gekennzeichnet, daß** die Hüllkörper aus Metall bestehen.

## Claims

1. An arrangement for the climate control of buildings, comprising a conduit (14, 24) for a heat carrier medium, which conduit is provided within a building part bounding a room and is in heat transfer connection with a room boundary surface to be cooled or to be heated, a device for heating or cooling the heat carrier medium, a conveyor system for conveying the heat carrier medium through the conduit (14, 24) and a latent heat storage arranged in the building part, the storage material of which is in heat transfer connection with the room boundary surface of the building part and the conduit (14, 24) for the heat carrier medium, the storage material being arranged in closed enveloping bodies (20, 26, 28), **characterized in that** the enveloping bodies containing the storage material are arranged between a first screed layer in which conduits carrying the heat carrier medium are embedded, and a second screed layer forming the room boundary surface.

2. The arrangement according to claim 1, **characterized in that** the melting temperature of the storage material lies between about 16°C and 20°C.

3. The arrangement according to claim 1 or 2, **characterized in that** the enveloping bodies (20, 26) containing the storage material are embedded into the material (18) forming the building part.

4. The arrangement according to one of the claims 1 to 3, **characterized in that** the enveloping bodies containing the storage material at least partially surround conduits enclosing the heat carrier medium.

5. The arrangement according to one of the claims 1 to 4, **characterized in that** the enveloping bodies are spheres (20) having a diameter of about 1µ to 30 mm.

6. The arrangement according to one of the claims 1 to 5, **characterized in that** the enveloping bodies are blind tubes (26) having a circular or polygonal cross-section.

7. The arrangement according to claim 6, **characterized in that** the blind tubes have a length of about 300 to 900 mm.

8. The arrangement according to claim 6 or 7, **characterized in that** the blind tubes are mounted to flat support elements (12) laid in the building part.

9. The arrangement according to claim 8, **characterized in that** the blind tubes (26) are held by means of clip holders formed on the support elements (12).

10. The arrangement according to claim 1, **characterized in that** the enveloping bodies (32) are plate-shaped and have holders (34) for conduits carrying the heat carrier medium on their outside.

11. The arrangement according to claim 1, **characterized in that** the enveloping bodies have the shape of flat cuboids (28).

12. The arrangement according to claim 11, **characterized in that** the base area of the cuboid is about 25 x 30 mm.

13. The arrangement according to claim 11 or 12, **characterized in that** the enveloping bodies containing the storage material are mounted to a flexible material web (30) in spaced-apart rows.

14. The arrangement according to claim 13, **characterized in that** the material web (30) is a grid fleece.

15. The arrangement according to one of the claims 1 to 14, **characterized in that** the enveloping bodies (20, 26, 28) are made of plastic.

16. The arrangement according to one of the claims 1 to 15, **characterized in that** the enveloping bodies (32) are made of metal.

17. A plate-shaped construction element for constructing buildings, **characterized by** a conduit (14, 24) for a heat carrier medium, which conduit is in heat transfer connection with a room boundary surface of the construction element and can be connected to a conveyor system for the heat carrier medium, and a latent heat storage arranged within the construction element, the storage material whereof is in heat transfer connection with both the room boundary surface and the conduit for the heat carrier medium, the storage material being arranged in closed enveloping bodies (20, 26, 28), **characterized in that** the enveloping bodies containing the storage material are arranged between a first screed layer (18') in which conduits carrying the heat carrier medium are embedded, and a second screed layer (18") forming the room boundary surface.

18. The construction element according to claim 17, **characterized in that** the melting temperature of the storage material lies between about 16°C and 20°C.

19. The construction element according to claim 17 or 18, **characterized in that** the enveloping bodies (20, 26) containing the storage material are embedded into the material forming the construction element.

20. The construction element according to claim 17 to 19, **characterized in that** the enveloping bodies (20) containing the storage material at least partially surround conduits (14) carrying the heat carrier medium.

21. The construction element according to one of the claims 17 to 20, **characterized in that** the enveloping bodies are spheres (20) having a diameter between 1µ and 30 mm.

22. The construction element according to one of the claims 17 to 20, **characterized in that** the enveloping bodies are blind tubes (26) having a circular or polygonal cross-section.

23. The construction element according to claim 22, **characterized in that** the blind tubes (26) have a length of about 300 to 900 mm.

24. The construction element according to claim 22 or 23, **characterized in that** the blind tubes (26) are mounted to flat support elements (12) laid in the construction element.

25. The construction element according to claim 24, **characterized in that** the blind tubes (26) are held by means of clip holders formed on the support elements (12).

26. The construction element according to claim 17, **characterized in that** the enveloping bodies (32) are plate-shaped and have holders (34) for conduits carrying the heat carrier medium on their outside.

27. The construction element according to claim 17, **characterized in that** the enveloping bodies have the shape of flat cuboids (28).

28. The construction element according to claim 27, **characterized in that** the base area of the cuboid is about 25 x 30 mm.

29. The construction element according to claim 27 or 28, **characterized in that** the enveloping bodies containing the storage material are mounted to a flexible material web (30) in spaced-apart rows.

30. The construction element according to claim 29, **characterized in that** the material web (30) is a grid fleece.

31. The construction element according to one of the claims 17 to 30, **characterized in that** the enveloping bodies are made of plastic.

32. The construction element according to one of the claims 17 to 30, **characterized in that** the enveloping bodies are made of metal.

## Revendications

1. Système de climatisation de bâtiments, ledit système comportant un guide (14, 24) destiné à un fluide caloporteur, qui est prévu à l'intérieur d'une pièce de bâtiment délimitant un espace et qui est en liaison de thermoconduction avec une surface de délimitation d'espace à refroidir ou à chauffer, un dispositif de chauffage ou de refroidissement du fluide caloporteur, un dispositif de transport du fluide caloporteur à travers le guide (14, 24), et un accumulateur de chaleur latente qui est disposé dans la pièce de bâtiment et dont le matériau accumulateur est en liaison de thermoconduction avec la surface de délimitation d'espace de la pièce de bâtiment et avec le guide (14, 24) destiné au fluide caloporteur, le matériau accumulateur étant disposé dans des corps d'enveloppe fermés (20, 26, 28), **caractérisé en ce que** les corps d'enveloppe contenant le matériau accumulateur sont disposés entre une première couche de ciment dans laquelle sont incorporées des conduites guidant le fluide caloporteur et une deuxième couche de ciment formant la surface de délimitation d'espace.

2. Système selon la revendication 1, **caractérisé en ce que** la température de fusion du matériau accumulateur est située entre 16°C et 20°C environ.

3. Système selon la revendication 1 ou 2, **caractérisé en ce que** les corps d'enveloppe (20, 26) qui contiennent le matériau accumulateur sont incorporés dans le matériau (18) qui forme la pièce de bâtiment.

4. Système selon l'une des revendications 1 à 3, **caractérisé en ce que** les corps d'enveloppe contenant le matériau accumulateur entourent au moins partiellement des conduites qui enferment le fluide caloporteur.

5. Système selon l'une des revendications 1 à 4, **caractérisé en ce que** les corps d'enveloppe sont des billes (20) d'un diamètre de 1 µm à 30 mm environ.

6. Système selon l'une des revendications 1 à 5, **caractérisé en ce que** les corps d'enveloppe sont des tubes borgnes (26) de section circulaire ou polygonale.

7. Système selon la revendication 6, **caractérisé en ce que** les tubes borgnes ont une longueur de 300 à 900 mm environ.

8. Système selon la revendication 6 ou 7, **caractérisé en ce que** les tubes borgnes sont fixés à des éléments de support plans (12) montés dans la pièce de bâtiment.

9. Système selon la revendication 8, **caractérisé en ce que** les tubes borgnes (26) sont maintenus au moyen de fixations de type agrafes conformées au niveau des éléments de support (12).

10. Système selon la revendication 1, **caractérisé en ce que** les corps d'enveloppe (32) sont conformés en plaques, et possèdent sur leur côté extérieur des fixations (34) destinées à des conduites guidant le fluide caloporteur.

11. Système selon la revendication 1, **caractérisé en ce que** les corps d'enveloppe ont la forme de parallélépipèdes plats (28).

12. Système selon la revendication 11, **caractérisé en ce que** la surface de base des parallélépipèdes est de 25 x 30 mm environ.

13. Système selon la revendication 11 ou 12, **caractérisé en ce que** les corps d'enveloppe contenant le matériau accumulateur sont fixés en rangées espacées à un panneau de matériau flexible (30).

14. Système selon la revendication 13, **caractérisé en ce que** le panneau de matériau (30) est un matelas de fibres en treillis.

15. Système selon l'une des revendications 1 à 14, **caractérisé en ce que** les corps d'enveloppe (20, 26, 28) sont en matière plastique.

16. Système selon l'une des revendications 1 à 15, **caractérisé en ce que** les corps d'enveloppe (32) sont en métal.

17. Élément de construction en forme de plaque destiné à la construction de bâtiments, **caractérisé par** un guide (14, 24) destiné à un fluide caloporteur, qui est en liaison de thermoconduction avec une surface de délimitation d'espace de l'élément de construction, et qui peut être raccordé à un dispositif de transport du fluide caloporteur, et par un accumulateur de chaleur latente qui est disposé à l'intérieur de l'élément de construction et dont le matériau accumulateur est en liaison de thermoconduction aussi bien avec la surface de délimitation d'espace qu'avec le guide destiné au fluide caloporteur, le matériau accumulateur étant disposé dans des corps d'enveloppe fermés (20, 26, 28), **caractérisé en ce que** les corps d'enveloppe contenant le matériau accumulateur sont disposés entre une première couche de ciment (18'), dans laquelle sont incorporées des conduites guidant le fluide caloporteur, et une deuxième couche de ciment (18'') qui forme la surface de délimitation d'espace.

18. Élément de construction selon la revendication 17, **caractérisé en ce que** la température de fusion du matériau accumulateur est située entre 16°C et 20°C environ.

19. Élément de construction selon la revendication 17 ou 18, **caractérisé en ce que** les corps d'enveloppe (20, 26) contenant le matériau accumulateur sont incorporés dans le matériau formant l'élément de construction.

20. Élément de construction selon l'une des revendications 17 à 19, **caractérisé en ce que** les corps d'enveloppe (20) contenant le matériau accumulateur entourent au moins partiellement des conduites (14) guidant le fluide caloporteur.

21. Élément de construction selon l'une des revendications 17 à 20, **caractérisé en ce que** les corps d'enveloppe sont des billes (20) d'un diamètre de 1 µm à 30 mm.

22. Élément de construction selon l'une des revendications 17 à 20, **caractérisé en ce que** les corps d'enveloppe sont des tubes borgnes (26) de section circulaire ou polygonale.

23. Élément de construction selon la revendication 22, **caractérisé en ce que** les tubes borgnes (26) ont une longueur de 300 à 900 mm environ.

24. Élément de construction selon la revendication 22 ou 23, **caractérisé en ce que** les tubes borgnes (26) sont fixés à des éléments de support plans (12) montés dans l'élément de construction.

25. Élément de construction selon la revendication 24, **caractérisé en ce que** les tubes borgnes (26) sont maintenus au moyen de fixations de type agrafes conformées au niveau des éléments de support (12).

26. Élément selon la revendication 17, **caractérisé en ce que** les corps d'enveloppe (32) sont conformés en plaques, et possèdent sur leur côté extérieur des fixations (34) destinées à des conduites guidant le fluide caloporteur.

27. Élément selon la revendication 17, **caractérisé en ce que** les corps d'enveloppe ont la forme de parallélépipèdes plats (28).

28. Élément de construction selon la revendication 27, **caractérisé en ce que** la surface de base des parallélépipèdes est de 25 x 30 mm environ.

29. Élément de construction selon la revendication 27 ou 28, **caractérisé en ce que** les corps d'enveloppe contenant le matériau accumulateur sont fixés en rangées espacées à un panneau de matériau flexible (30).

30. Élément de construction selon la revendication 29, **caractérisé en ce que** le panneau de matériau (30) est un matelas de fibres en treillis.

31. Élément de construction selon l'une des revendications 17 à 30, **caractérisé en ce que** les corps d'enveloppe sont en matière plastique.

32. Élément de construction selon l'une des revendications 17 à 30, **caractérisé en ce que** les corps d'enveloppe sont en métal.
